# EUROPEAN PATENT APPLICATION

(11) **EP 0 976 682 A2**
(43) Date of publication of application: **02.02.2000**
(21) Application number: 99305988.0
(22) Date of filing: 28.07.1999
(51) Int. Cl.: C02F 1/48, F02M 27/04

(54) **Magnetic treatment of fluids**

(30) Priority: 28.07.1998 GB 9816332
(71) Applicant: MITech UK Ltd., Blackpool, Lancashire FY1 1PD (GB)
(72) Inventor: McClenaghan, Brent, Blackpool, Lancashire, FY1 6LY (GB); Timms, Nigel David, St. Annes, Lancashire FY8 2JX (GB)
(74) Representative: Chugg, David John

(57) **Abstract**

A magnetic fluid treatment device (10) is arranged to be fitted in line with a fuel supply pipe (12) and comprises upper and lower peripheral box sections (14) and (16) respectively into which a plurality of magnets (18) are inserted. The fuel treatment device (10) also comprises upper and lower central box sections (20) and (22), into which further magnets (24) are inserted. Fuel flowing through the magnetic fuel treatment device (10) on its way to a fuel combustion point or the like is affected by the magnetic fields of the magnets (18) and (24), which results in a more efficient burning process.

## Description

This invention relates to apparatus for the magnetic treatment of fluids and to a method of treating fluids magnetically, particularly, but not limited to, apparatus and a method for the magnetic treatment of fuels.

The magnetic treatment of fuels is used to increase the combustion efficiency of the fuel. Magnets are placed around a fuel pipe, thereby subjecting the fuel within the pipe to a magnetic field, and the fuel is subsequently combusted. The mechanism by which the combustion efficiency of the fuel is increased is not well understood, but the effect has been utilised to good effect.

Also, other fluids such as water can be treated magnetically, to keep salts in suspension. It is known that tomatoes, for instance, have greater yields when irrigated with magnetically treated water.

Previous apparatus for magnetising fossil fuels has involved simply securing a pair of magnets or other arrangements at an angular separation of approximately 90° on a fuel pipe. This results in the magnetic field only extending into a portion of the fuel pipe because the field does not extend across the pipe but rather through a small sector thereof. Thus, the field is not perpendicular to flow of fluid. Disadvantages arise with this type of device because the fuel passing through the fuel pipe is not all magnetised. Furthermore, placing magnets on the outside of a fuel pipe becomes very inefficient with fuel pipes having a diameter of approximately 5cms or above, since the magnetic field passes through a smaller proportion of the fuel because of attenuation of the field.

It is an object of the present invention to address the above mentioned disadvantages.

According to one aspect of the present invention a magnetic fluid treatment device comprises a plurality of fluid channels, each fluid channel having at least one peripherally located magnet; the device cooperating with a fluid supply conduit, so that, in use, fluid flowing through the fluid channels is subjected to a magnetic field.

The magnet fluid treatment device may be a magnetic fuel or fossil fuel treatment device, in which case the fluid channels are fuel channels and the fluid supply conduit is a fuel supply conduit.

The fluid channels may be water channels.

The plurality of fluid channels may be formed by subsidiary channels of at least one major channel. The or each major channel may be subdivided by internal magnets located within the or each major channel. The internal magnets may be contained in a housing, which may, in use, prevent contact between the magnets and fluid in the channels. The housing may be a box section, preferably a box section of metal which contains and/or isolates magnetic fields.

The device may include at least one flow director between adjacent subsidiary channels to improve the flow of fluid therethrough by smoothly splitting or joining the flow of fluid. The or each flow director may have a tapered cross-section. Preferably, flow directors are included at leading and trailing ends of the subsidiary channels.

The or each peripherally located magnet may be held in position by retaining means.

The fluid channels may be located within an external housing. The external housing may comprise a plurality of sections which are arranged to be secured together to enclose the fluid channels. Preferably the external housing comprises first and second sections.

The first and second sections may be arranged to have a central section secured therebetween. Preferably, the central section comprises the fluid channels and a plurality of internal magnets.

The or each peripherally located magnet may be held in position by retaining means of the external housing. The retaining means may be at least one flange which forms a slot with a wall, preferably an interior wall, of the external housing, into which slot the peripherally located magnet may be inserted. The external housing may be made of metal that will isolate and/or contain magnetic fields, such as ferritic steel or electric steel.

The device may comprise attachment means at each end, which may be externally threaded or flanged portions, or similar attachment means to facilitate connection of the device to the fluid supply conduit.

The device may include at least one pressure sensing means which may be located at an end of the device. Preferably, the device includes pressure sensing means at both ends of the device.

Preferably, the magnetic field is applied substantially at right angles to the flow of fluid.

The magnets may be arranged to have first, like poles facing inwardly towards the central axis of the channels at a first, leading end of the device. Preferably the magnets are arranged at either side of the channels. The magnets may be arranged to have second, like poles facing inwardly towards the central axis of the channels at a second, trailing end of the device. The magnets may be arranged to have opposite poles facing inwardly towards the central axis of the channels in a central section of the device. The sense of the first like poles may be chosen depending on the fluid to be used. Alternatively, the magnets may be arranged to have opposite poles facing inwardly towards the central axis of the channels along the length of the device.

At least one of said fluid channels may contain a catalyst, preferably a tin alloy catalyst, to improve the combustion efficiency of fuel flowing therethrough. The catalyst may be held in position in a mesh bag. The catalyst may be held in position in the fluid channel(s) by retaining members extending across the channels, which retaining members may have a plurality of openings therein, to assist the passage of fuel therethrough. The retaining members may be mesh. One retaining mesh may be located upstream and one retaining mesh may be located downstream of the catalyst.

According to another aspect of the present invention a method for magnetically treating fluid comprises passing the fluid through a plurality of fluid channels of a fluid treatment device, each fluid channel having at least one peripherally located magnet, the fluid thereby being subjected to a magnetic field.

The fluid may be fuel, preferably fossil fuel, in which case the fluid channels are fuel channels and the fluid treatment device is a fuel treatment device.

The method may include subdiving the flow of fluid by means of magnets located within a major channel of the device, which magnets may thereby create subsidiary channels.

According to a still further aspect of the present invention, a magnetic fluid treatment device comprises at least one fluid conduit around which are arranged a plurality of magnets, wherein the magnets are arranged to have first, like poles facing inwardly towards a central axis of the or each channel at a first region of the device, second, like poles facing inwardly towards the central axis of the or each channel at a second region thereof, and opposite poles facing inwardly towards the central axis of the channels in a third region located between the first and second regions.

According to a still further aspect of the present invention, a magnetic fluid treatment device comprises at least one fluid conduit around which are arranged a plurality of magnets, wherein the magnets are arranged to have opposite poles facing inwardly towards a central axis of the or each channel.

All of the above aspects may be combined with any of the features disclosed herein, in any combination.

Specific embodiments of the present invention will now be described, by way of example, with reference to the accompanying drawings, in which:
Figure 1 is a diagrammatic sectional side view of a first embodiment of magnetic fuel treatment device;
Figure 2 is a sectional view across the line A-A in figure 1;
Figure 3 is a diagrammatic sectional top view of a second embodiment of magnetic fuel treatment device;
Figure 4 is a diagrammatic sectional side view of the second embodiment of magnetic fuel treatment device;
Figure 5 is a diagrammatic sectional view across the line A-A in figure 4;
Figure 6 is a diagrammatic sectional top view of a third embodiment of magnetic fuel treatment device;
Figure 7 is a diagrammatic sectional view across the line A-A in figure 6;
Figure 8a is a schematic view of a first arrangement of magnets in a fuel treatment device;
Figure 8b is a schematic view of a second arrangement of magnets;
Figure 8c is a schematic view of a third arrangement of magnets;
Figure 9a is a diagrammatic sectional side view of a further embodiment of fuel treatment device; and
Figure 9b is a cross sectional end view of figure 9a.

A magnetic fuel treatment device 10 is arranged to be fitted in line with a fuel supply pipe 12 and comprises upper and lower peripheral box sections 14 and 16 respectively into which a plurality of magnets 18 are inserted. The fuel treatment device 10 also comprises upper and lower central box sections 20 and 22, into which further magnets 24 are inserted. Fuel flowing through the magnetic fuel treatment device 10 on its way to a fuel combustion point or the like (not shown) is affected by the magnetic fields of the magnets 18 and 24, which results in a more efficient burning process.

The fuel treated can be fossil fuel, such as oil and gas or equivalent fuel types.

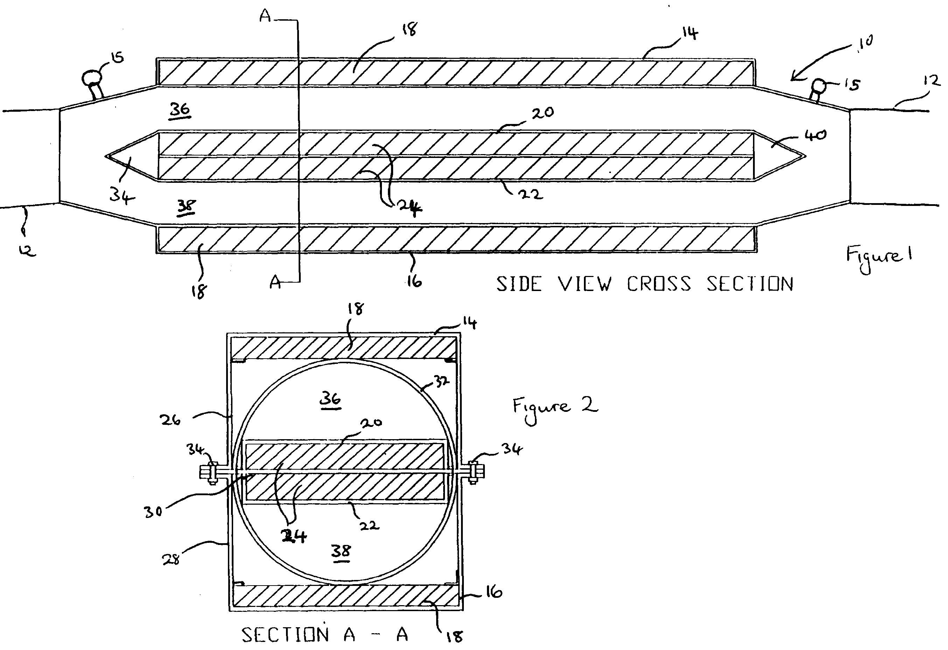

In more detail, the magnetic fuel treatment device 10 comprises upper and lower portions 26 and 28 (see figure 2) which include the upper and lower peripheral box sections 14 and 16 respectively. A central portion 30 is secured between the upper and lower portions 26 and 28. The central portion 30 comprises a section of pipe 32 having a circular cross section and the upper and lower central box sections 20 and 22. The upper and lower portions 26 and 28 and the central portion 30 are secured together by means of bolts 34.

The magnetic fuel treatment device 10 may be made of ferritic steel or electric steel generally termed magnetic containment steel, which is chosen because it does not become magnetised over time. Metals having similar properties could also be used.

Returning to figure 1, the upper and lower central box sections have a leading flow director 34, which serves to channel fuel flowing through the magnetic fuel treatment device 10 into upper and lower channels 36 and 38 and to ensure a smooth flow of the fuel. A corresponding trailing flow director 40 is included at the opposite end of the upper and lower central box sections 20 and 22.

The use of the various box sections 14, 16, 20 and 22 into which the magnets 18 and 24 are inserted allows for easy assembly of the magnetic fuel treatment device 10, because the magnets 18 and 24 can be slid into position before the various portions of the fuel treatment device 10 are secured together. This has particular advantages in the situation that like poles of the magnets 18 and 24 are to be placed adjacent to each other within the box sections 14, 16, 20 and 22, because the magnets strongly repel each other and would be prone to suddenly flip out of alignment. Arranging the magnets so that like poles are adjacent to each other can have beneficial effects for the magnetic treatment of the fuel.

The upper and lower channels 36 and 38 preferably have a maximum width which is less than 5cms. Consequently, the fuel in a fuel pipe having a bore of between 7.5 and 10cms, for instance, can be treated efficiently with the magnetic fuel treatment device 10 disclosed herein, without any disadvantageous effects of the fuel not being treated because of a lack of magnetic field affecting the fuel.

The upper and lower central box sections 20 and 22 which contain the magnets have a further beneficial effect over simply placing the magnets within the fuel pipe itself, which is that flakes of the magnet will not be released into the fuel which would be the case if the magnets were not enclosed. Consequently, clogging of the fuel burner due to flakes of magnet in the fuel is avoided.

The magnets used may include the following types: ceramic grades 1, 2 and 3; anisotropic ferite; samarium cobolt 1:5-2:17; neodymium N27-N50. The magnets may have Gauss values in the range 200-13,000.

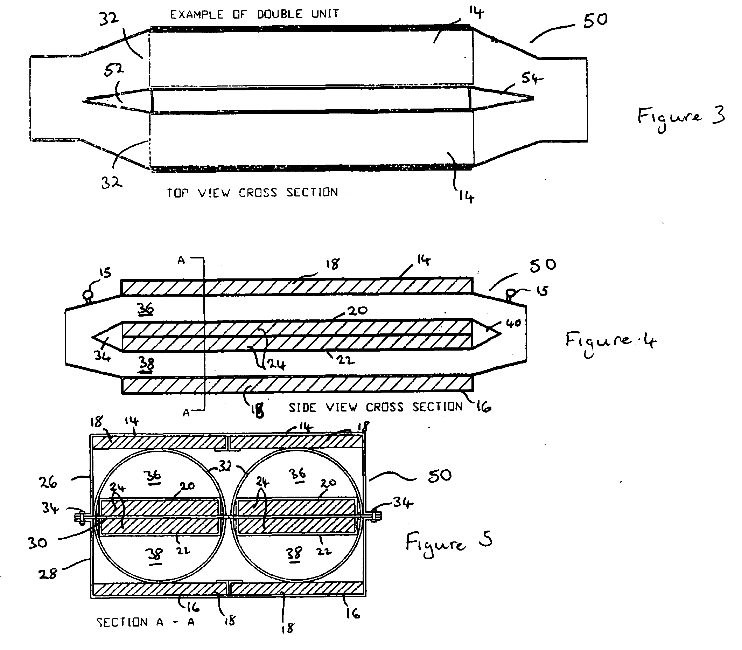

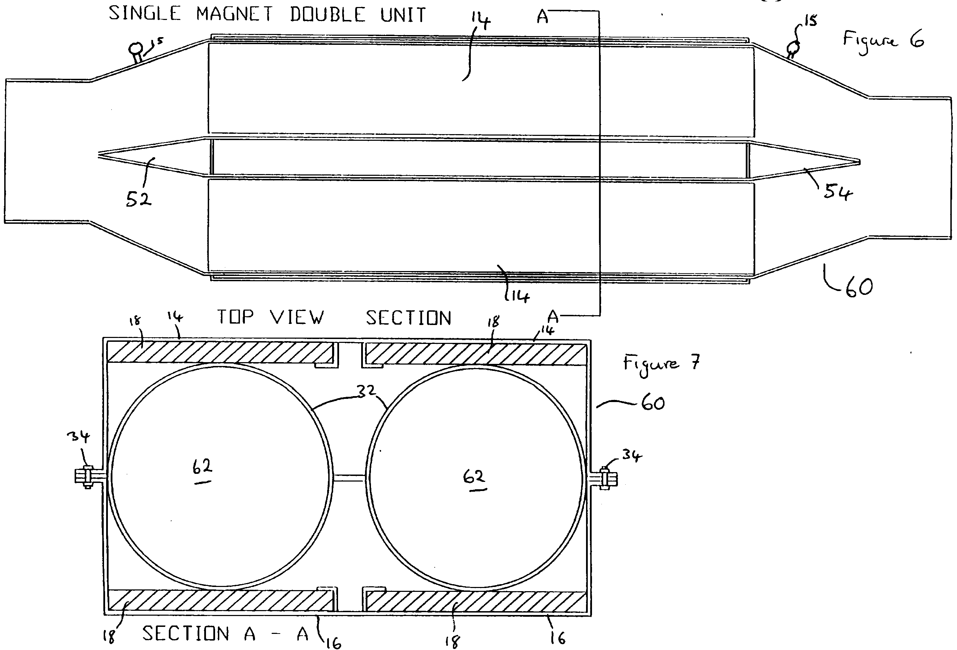

A second embodiment of magnetic fuel treatment device 50 is shown in figures 3 to 5. The fuel treatment device 50 is arranged and constructed in a very similar way to the fuel treatment device 10, except that this fuel treatment device 50 has twin pipe sections 32 each having their own upper and lower peripheral box sections 14 and 16, and upper and lower central box sections 20 and 22. The second embodiment of fuel treatment device 50 has all of the features of the first embodiment, with the addition of forward and rear flow directors 52 and 54 respectively, which serve to direct the flow between the two adjacent pipe sections 32.

The second embodiment has the additional advantage of allowing still smaller widths of channel 36 and 38, giving the required magnetic effect for treating fuel. Alternatively, larger bore fuel pipes can have the fuel efficiently treated by the magnets 18 and 24, because there are twice as many magnets 18 and 24 compared to the first embodiment - thus extending the treatment time of the fluid,

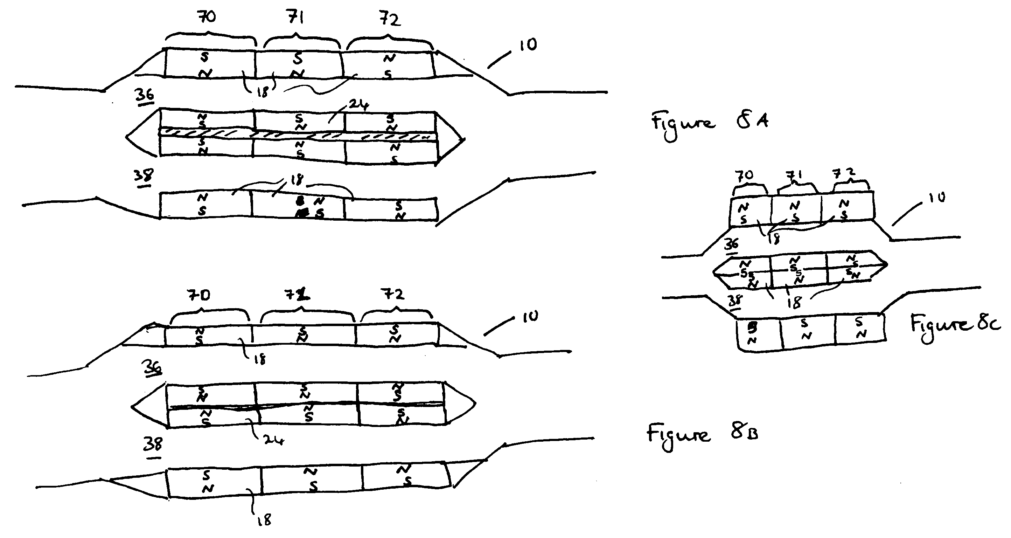

A third embodiment of magnetic fuel treatment device 60 is shown in figures 6 and 7. The structure of the device is similar to the second embodiment of fuel treatment device 50 except that the upper and lower central box sections 20 and 22 are not present, resulting in the two pipe sections 32 forming open channels 62, through which fuel may pass. The third embodiment has the forward and rear flow directors 52 and 54 present in the second embodiment. The third embodiment of fuel treatment device 60 is easier and cheaper to manufacture than the first two embodiments.

The magnetic field is preferably applied to the fuel at about 90° to the direction of flow.

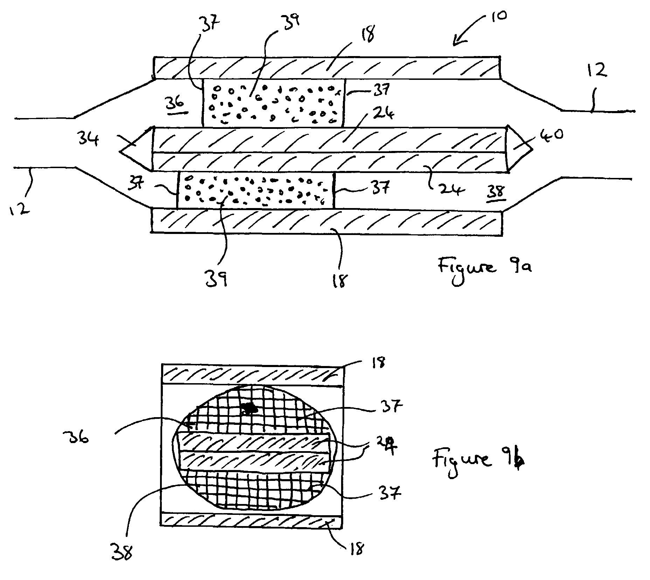

In all embodiments, the arrangement of the magnets 18 and 24 within the box sections 14, 16, 20 and 22 can be chosen to further increase the efficiency of burn of the fuel in the fuel pipe, depending on the type of fuel used. Figures 8a and 8b show possible arrangements which have been found to be beneficial for gas and oil respectively. Figure 8c shows a further configuration.

In figure 8a the magnets are arranged so that the gas entering the fuel treatment device 10 first encounters a first set of magnets 70 which have their north poles facing in towards the channels 36 and 38. A second set of magnets 71 have one north pole and one south pole facing into each of the channels 36 and 38. A third set of magnets 72 have their south poles facing in towards the channels 36 and 38.

In figure 8b the order of the magnets is reversed from that shown in figure 8a. The first set of magnets 70 has south poles facing in towards the channels 36 and 38 the second set 71 is the same as figure 8a, but the third set 72 has north poles facing in towards the channels 36 and 38.

In Figure 8c the magnets are arranged so that the fluid entering the device 10 encounters sets of magnets to which have opposite poles facing in towards the channels 36 and 38.

The arrangements of magnets shown in figures 8a and 8b can be altered to reflect a longer fuel treatment device 10. In this case, the first, second and third sets of magnets 70, 71 and 72 may comprise adjacent magnets 18 and 24 having the same alignment of poles ie. two magnets 18 together having their north poles facing inwards for the first set of magnets 70, followed by a pair of adjacent magnets having the same orientation for the second set 71 and the third set 72 having adjacent magnets having the south poles facing inwards towards the channels 36 and 38. Further combinations of the alignment of the poles and the magnets can also be envisaged within the scope of the invention.

A further embodiment of fuel treatment device is shown in figures 9a and 9b. This embodiment includes a catalyst 39 which can be a tin alloy catalyst containing tin, antimony, lead and mercury for improving fuel combustion efficiency. The catalyst is held in the fuel channels 36 and 38, either in a mesh bag (not shown) or between mesh retaining members 37. Catalysts are known to improve fuel combustion efficiency. The provision of a catalyst within the fuel channels does not significantly affect throughflow whilst providing a very compact fuel treatment device.

The above embodiments have referred to the use of fuel in the fuel treatment device 10. If water, or other fluids, are fed through the device, it is also known that beneficial yields of plants and crops etc are achieved. Consequently, without departing from the scope of the invention the fuel treatment devices may be fluid treatment devices.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A magnetic fluid treatment device comprises a plurality of fluid channels, each fluid channel having at least one peripherally located magnet; the device cooperating with a fluid supply conduit, so that, in use, fluid flowing through the fluid channels is subjected to a magnetic field.

2. A magnetic fluid treatment device as claimed in claim 1, in which the fluid channels are fuel channels and the fluid supply conduit is a fuel supply conduit.

3. A magnetic fluid treatment device as claimed in any preceding claim, in which the plurality of fluid channels are formed by subsidiary channels of at least one major channel.

4. A magnetic fluid treatment device as claimed in claim 3, in which the or each major channel is subdivided by internal magnets located within the or each major channel.

5. A magnetic fluid treatment device as claimed in claim 4, in which the internal magnets are contained in a housing, which, housing, in use, prevents contact between the magnets and fluid in the channels.

6. A magnetic fluid treatment device as claimed in any preceding claim, in which the fluid channels are located within an external housing.

7. A magnetic fluid treatment device as claimed in any preceding claim, in which the magnets are arranged to have first, like poles facing inwardly towards the central axis of the channels at a first, leading end of the device.

8. A magnetic fluid treatment device as claimed in any preceding claim, in which at least one of said fluid channels contains a catalyst, to improve the combustion efficiency of fuel flowing therethrough.

9. A magnetic fluid treatment device as claimed in claim 8, in which the catalyst is held in position in the fluid channel(s) by retaining sections extending across the channels.

10. A method for magnetically treating fluid comprises passing the fluid through a plurality of fluid channels of a fluid treatment device, each fluid channel having at least one peripherally located magnet, the fluid thereby being subjected to a magnetic field.

11. A magnetic fluid treatment device comprises at least one fluid conduit around which are arranged a plurality of magnets, wherein the magnets are arranged to have first, like poles facing inwardly towards a central axis of the or each channel at a first region of the device, second, like poles facing inwardly towards the central axis of the or each channel at a second region thereof, and opposite poles facing inwardly towards the central axis of the channels in a third region located between the first and second regions.

12. A magnetic fluid treatment device comprises at least one fluid conduit around which are arranged a plurality of magnets, wherein the magnets are arranged to have opposite poles facing inwardly towards a central axis of the or each channel.
